# EUROPÄISCHE PATENTSCHRIFT

(11) **EP 2 987 608 B1**
(45) Veröffentlichungstag und Bekanntmachung des Hinweises auf die Patenterteilung: **19.09.2018**
(21) Anmeldenummer: 14181647.0
(22) Anmeldetag: 20.08.2014
(51) Int. Cl.: B29C 49/46, B29C 49/06, B29C 49/12, B29C 49/36

(54) **Formfüllmaschine**
Machine for forming and filling
Machine de thermosoufflage et de remplissage

(43) Veröffentlichungstag der Anmeldung: 24.02.2016
(73) Patentinhaber: Krones AG, 93073 Neutraubling (DE)
(72) Erfinder: Winzinger, Frank, 93073 Neutraubling (DE)
(74) Vertreter: Grünecker Patent- und Rechtsanwälte PartG mbB

(56) Entgegenhaltungen:
- EP-A2- 2 347 882
- DE-A1-102011 009 889
- US-A1- 2009 160 102
- US-A1- 2011 031 659
- US-A1- 2012 248 660
- US-A1- 2014 145 377

## Beschreibung

Die Erfindung betrifft eine Formfüllmaschine gemäß Oberbegriff des Anspruchs 1 und ein Verfahren zum Ausformen und Füllen von Kunststoffbehältern gemäß Oberbegriff des Anspruchs 6.

### Stand der Technik

Bekanntermaßen lassen sich Kunststoffbehälter im Streckblasverfahren aus Vorformlingen herstellen.

Alternativ zu einem Aufblasen der Behälter mit Pressluft beschreibt die EP 1529620 B1 ein Verfahren zum hydraulischen Umformen von Vorformlingen zu Kunststoffflaschen. Zu diesem Zweck werden die Vorformlinge zuerst erwärmt, in eine Hohlform verbracht und dort in Längsrichtung gereckt. Es wird ferner Mineralwasser oder dergleichen unter Überdruck eingeleitet, um die endgültige Behälterform herzustellen. Das Mineralwasser verbleibt im Behälter, sodass ein nachfolgender separater Abfüllschritt entbehrlich ist.

Die US 2011/0031659 A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter geweitet wird. Danach wird das Fluid durch Pressluft verdrängt und läuft aus dem Behälter ab.

Weitere Verfahren sind noch in US2012/248660A1, DE102011009889A1 und EP2347882A2 beschrieben.

Eine Formfüllmaschine umfasst definitionsgemäß wenigstens eine Behandlungsstation zum expandierenden Umformen von Kunststoffvorformlingen zu Kunststoffbehältern in einer Hohlform und zum Einfüllen eines im Wesentlichen flüssigen Produkts oder wenigstens einer flüssigen oder festen Komponente des Produkts in die Kunststoffbehälter.

Flüssigkeiten, auch solche mit darin gelöstem Kohlendioxid oder dergleichen, sind definitionsgemäß hinsichtlich ihrer Funktion beim Ausformen und Füllen der Behälter inkompressible Fluide im Gegensatz zu Gasen, die funktional als kompressible Fluide definiert sind.

Um während des Ausformens bestimmte Oberflächenprofile am Behälter zu realisieren, ist es bekannt, den Behälter vor dem Ausformen lokal zu kühlen. Dazu kann beispielsweise kalte Luft verwendet werden oder ein Aufheizen nur bestimmter Bereiche des Vorformlings (preferential heating) in einem der Formfüllmaschine vorgelagerten Ofen erfolgen.

Aufgrund von Wärmeaustausch mit der Umgebung und insbesondere der schlechten Kühlleistung bei Luft als verwendetes lokales Kühlmedium, sind diese Verfahren nur mit hohem Aufwand mit einer möglichst hohen Genauigkeit realisierbar.

### Aufgabe

Der Erfindung liegt ausgehend vom Stand der Technik die Aufgabe zugrunde, die lokale Kühlung einzelner Bereiche des Vorformlings vor dem abschließenden Ausformen des Behälters zu verbessern.

### Lösung

Diese Aufgabe wird erfindungsgemäß durch die Formfüllmaschine nach unabhängigem Anspruch 1 und das Formfüllverfahren nach unabhängigem Anspruch 6 gelöst. Vorteilhafte Weiterbildungen der Erfindung sind in den Unteransprüchen erfasst.

Die erfindungsgemäße Formfüllmaschine zum Formen von Vorformlingen zu Behältern und Füllen der Behälter ist dadurch gekennzeichnet, dass die Mittel zur lokalen Kühlung so ausgebildet sind, dass ein flüssiges Medium in den Vorformling auf den wenigstens einen lokal zu kühlenden Bereich eingebracht werden kann, bevor der Vorformling vollständig ausgeformt ist. Durch die lokale Kühlung mit einem flüssigen Medium, wie beispielsweise Wasser, kann eine erheblich schnellere Kühlung stattfinden, da Flüssigkeiten im Allgemeinen über eine deutlich höhere Wärmekapazität als Gase verfügen. Somit kann nicht nur gewährleistet werden, dass die Bereiche des Vorformlings oder des im Ausformen befindlichen Behälters mit hoher Zuverlässigkeit gekühlt werden sondern es kann auch die benötigte Zeit für das lokale Kühlen reduziert werden, was den Durchsatz der gesamten Formfüllmaschine erhöhen kann.

Es kann vorgesehen sein, dass das Medium das in den Behälter zu füllende Produkt ist. Mit dieser Ausführungsform kann der sich an das Ausformen des Behälters anschließende Füllvorgang verkürzt werden.

Weiterhin können die Mittel eine in einen Vorformling einführbare Lanze umfassen, die ein oder mehrere Düsen aufweist, durch die das Medium auf den Bereich aufgebracht werden kann. In Abhängigkeit der Form der Lanze und der entsprechenden Düsenöffnungen können bestimmte Anforderungen an das Kühlprofil erfüllt werden.

In einer Weiterbildung dieser Ausführungsform ist die Lanze eine zum Ausformen des Behälters verwendete Reckstange. Da die Reckstange beim Verstrecken von Vorformlingen zum Behälter ganz oder vollständig in den auszuformenden Behälter eingefahren ist, kann hier in allen Bereichen eine Kühlung bestimmter Bereiche bereits während des Verstreckens erfolgen.

In einer Ausführungsform ist die Formfüllmaschine dadurch gekennzeichnet, dass durch die Lanze zum zumindest teilweisen Ausformen des Vorformlings Produkt in den Vorformling geleitet werden kann. Wird nicht nur für das Kühlen sondern auch für das Ausformen des eigentlichen Behälters das Produkt verwendet, so kann die benötigte Zeit zum anschließenden Befüllen des Behälters noch weiter reduziert werden.

Das erfindungsgemäße Formfüllverfahren zum Formen von Behältern aus Vorformlingen und Befüllen der Behälter ist dadurch gekennzeichnet, dass ein flüssiges Medium zum lokalen Kühlen des wenigstens einen Bereichs verwendet wird. Dieses Verfahren erlaubt eine deutlich effektivere und schnellere Kühlung bestimmter Bereiche des Vorformlings oder des sich im Ausformen befindlichen Behälters.

In einer Ausführungsform ist das Formfüllverfahren dadurch gekennzeichnet, dass das Medium das in den Behälter zu füllende Produkt ist. Die anschließende Befüllung kann so in weniger Zeit erfolgen. Weiterhin kann der Wärmeaustausch des eingefüllten Produkts mit der Innenfläche des Vorformlings oder des Behälters dazu genutzt werden, das sich erwärmende Produkt zu sterilisieren.

In einer Ausführungsform ist das Formfüllverfahren dadurch gekennzeichnet, dass das Medium über eine in den Vorformling einführbare Lanze mit einer oder mehreren Düsen in den Vorformling eingebracht wird. Durch die Wahl der Form, Ausrichtung und Position der Düsen kann gezielt ein Bereich des Behälters gekühlt werden. Beispielsweise umfasst der zu kühlende Bereich des Vorformlings einen Streifen parallel oder senkrecht zur Längsachse des Vorformlings. Eine gezielte Kühlung dieser Bereiche kann durch geeignete Wahl der Öffnungen, beispielsweise der Düsen, in der Lanze erreicht werden.

In einer Weiterbildung ist die Lanze eine zum Ausformen verwendete Reckstange.

Das Formfüllverfahren gemäß einer weiteren Ausführungsform ist dadurch gekennzeichnet, dass das Kühlen durch Aufbringen und Herunterlaufen des Mediums an der Vorformlinginnenseite erfolgt. Da sich das verwendete Medium an der Innenseite des Vorformlings bzw. Behälters verteilt, kann durch das sich langsam erwärmende Medium auch ein Temperaturgradient in dem gekühlten Bereich erzeugt werden, wobei der Auftreffpunkt des Kühlmediums im Vorformling die niedrigste Temperatur aufweist und die Temperatur des Vorformlings mit Entfernung zum Austrittspunkt, abhängig von der Fließgeschwindigkeit, Temperatur und Wärmekapazität sowie -leitfähigkeit des Kühlmediums zunimmt.

In einer Weiterbildung dieser Ausführungsform wird der Ausbringdruck des Mediums in Abhängigkeit einer vorgegebenen Temperaturverteilung bestimmt. Durch Einstellung des Drucks in Abhängigkeit einer vorgegebenen Verteilung kann die Fließgeschwindigkeit des sich verteilenden Mediums beeinflusst werden und somit eine bestimmte Temperaturverteilung erreicht werden.

Weiterhin kann das Kühlen erfolgen bevor der Behälter bis zu 70%, bevorzugt 50% seiner Zielgröße ausgeformt wurde. Da die Kühlung mit einem flüssigen Medium, verglichen mit gasförmiger Kühlung, sehr effektiv ist, kann zum Einprägen eines Temperaturgradienten oder einer Temperaturverteilung an der Innenseite des Behälters die Kühlung auch bei einem bereits nahezu ausgebildeten Behälter erfolgen.

Insbesondere erfolgt das Kühlen, nachdem der Vorfromling schon mindestens 10%, bevorzugt mindestens 30% seiner Zielgröße erreicht hat. Unter Zielgröße wird insbesondere das Volumen verstanden.

Insbesondere kann ein Kühlen mit Produkt erst dann erfolgen, wenn der Vorformling bereits mindestens 30%, bevorzugt 50%, noch bevorzugter 80% seiner Ausdehnung in Längsrichtung (radiale Richtung unberücksichtigt) erfahren hat. Somit ist die Wandstärke während des Kühlens dünner und die Kühlung effektiver. Dies gilt insbesondere, wenn eine Beeinflussung des Wandstärkenprofils in Umfangsrichtung stattfinden soll.

Insbesondere wird der Vorformling mittels einer Reckstange bis zu einem Blasformboden vollständig in seiner Längsrichtung gedehnt, während dabei durch eine die Reckstange ringförmig umgebende Blasdüse gasförmiges Medium in den Behälter eingeführt wird (Vorblasen). Anschließend wird über eine Fülldüse oder über die Blasdüse selbst das kühlende Produkt in den Behälter eingefüllt, und zwar derart, dass in Umfangsrichtung des Vorformlings mindestens ein Bereich von 5° mit dem Produkt und ein Bereich von mindestens 5° nicht mit dem Produkt benetzt werden. Der benetzte Bereich kühlt infolgedessen ab. Schon währenddessen oder kurz danach kann mittels eines gasförmigen Mediums der Behälter vollkommen in radialer Richtung expandiert werden. Alternativ kann der Behälter kurz danach mit dem Produkt selbst vollständig expandiert werden.

In einer Alternative wird der Vorformling mittels einer Reckstange bis zu einem Blasformboden vollständig in seiner Längsrichtung gedehnt, während dabei durch eine die Reckstange ringförmig umgebende Blasdüse gasförmiges Medium in den Behälter eingeführt wird (Vorblasen). Anschließend oder schon währenddessen wird über die Reckstange das kühlende Produkt in den Behälter eingefüllt bzw. eingespritzt, und zwar derart, dass
- in Umfangsrichtung des Vorformlings mindestens ein Bereich von 5° mit dem Produkt somit abgekühlt und ein Bereich von mindestens 5° nicht mit dem Produkt benetzt werden.
   und/oder
- in Längsrichtung des Vorformlings mindestens ein Bereich von 0,5cm² mit dem Produkt und ein Bereich von mindestens 0,5cm² nicht mit dem Produkt benetzt werden. Diese Alternative geschieht insbesondere währenddessen (während einem sehr kurzen Zeitraum) oder bevorzugt schon kurz vorher.

Schon während dieser Schritte oder kurz danach kann mittels eines gasförmigen Mediums der Behälter vollkommen in radialer Richtung expandiert werden. Alternativ kann der Behälter kurz danach mit dem Produkt selbst vollständig expandiert werden.

Wenn durch die Reckstange Produkt zum Kühlen des Vorformlings in bestimmten Bereichen entlang seine Längsachse eingeleitet wird, handelt es sich insbesondere um sehr kleine Mengen an Produkt, welche nur eine sehr geringe Abkühlung der darunterliegenden Bereiche (in Schwerkraftrichtung) durch Herunterrinnen bewirken.In einer Ausführungsform ist das Formfüllverfahren dadurch gekennzeichnet, dass das Ausformen mit Produkt erfolgt.

Zusätzlich dazu kann das Ausformen in zwei Teilschritten erfolgen, wobei im ersten Teilschritt das Ausformen mit heißem Produkt oder Luft erfolgt und im zweiten Teilschritt das Ausformen mit kaltem Produkt erfolgt. Das Ausformen mit heißem Produkt kann zur Sterilisation der Innenseite des Behälters genutzt werden. Wird Luft verwendet, so bleibt aufgrund der geringeren Wärmekapazität des Gases die Temperaturverteilung an der Innenseite des Behälters während des Ausformprozesses annähernd konstant, so dass unerwünschte Einwirkungen aufgrund der Erwärmung oder Abkühlung des Behälters während des Ausformens unterdrückt werden können. Die Einleitung von kaltem Produkt im zweiten Teilabschnitt des Ausformens erlaubt eine effektive Kühlung des ausgeformten Behälters.

### Kurze Beschreibung der Figuren

- Fig. 1: Schematische Darstellung einer erfindungsgemäßen Formfüllmaschine.
- Fig. 2: Schematische Darstellung einer Formfüllstation gemäß der Erfindung.
- Fig. 3: Schematische Darstellung einer weiteren Formfüllstation gemäß einer weiteren Ausführungsform.
- Fig. 4 a-f: Schematische Darstellungen unterschiedlicher Ausführungsformen der Düse.

### Ausführliche Beschreibung

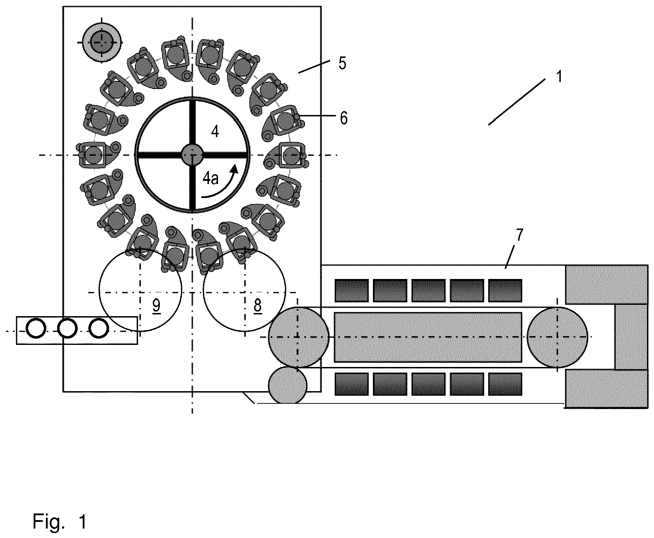

Fig. 1 zeigt eine schematische Darstellung einer erfindungsgemäßen Formfüllmaschine 5 in einer Formfüllanlage 1. Diese kann, wie hier dargestellt, beispielsweise als Rundläufermaschine ausgebildet sein, die über eine Vielzahl von Formfüllstationen 6, die auf einem Karussell 4 angeordnet sind, verfügt. Das Karussell kann entlang der dargestellten Pfeilrichtung 4a um eine Achse drehbar sein. Den unterschiedlichen Formfüllstationen können über entsprechende Zuförder- und Abfördereinrichtungen 8, 9, wie beispielsweise Drehsterne, Vorformlinge aus Kunststoffmaterialien, wie beispielsweise PET zugeführt werden.

Insbesondere ist eine Vielzahl von Form- und Füllstationen vorgesehen, welche insbesondere am Außenumfang eines sich kontinuierlich drehenden Rundläufers angeordnet sind. Bei dem Rundläufer handelt es sich vorzugsweise um ein Rad.

Der Rundläufer dreht sich insbesondere um eine vertikale Achse, deren Verlängerung den Erdmittelpunkt schneidet.

Insbesondere sind die Stationen alle in äquidistanten Abständen zueinander angeordnet. Die Stationen weisen insbesondere Kavitäten auf, innerhalb derer die Behälter gegen die inneren Wände der Kavität expandiert werden, so dass die fertig ausgeformten Behälter die (negative) Form der inneren Wände der Kavität erhalten.

Insbesondere ist daran gedacht, die Behälter noch innerhalb dieser Kavität zu verschließen. Hierfür kann an der Peripherie des Rundläufers eine Verschlusszuführung angeordnet sein.

Insbesondere findet die Herstellung bzw. Expansion und das Befüllen der Behälter innerhalb eines Raums mit kontaminationsarmer Umgebung transportiert. Die kontaminationsarme Umgebung, bei der es sich insbesondere um einen Reinraum handelt, kann durch eine oder Kombinationen der folgenden Maßnahmen hergestellt werden:
- Die kontaminationsarme Umgebung der Vorrichtung (innerhalb eines Maschinenschutzes) wird unter einen Überdruck im Vergleich zur Umgebungsatmosphäre gesetzt, indem durch Feinfilter filtrierte Luft zumindest während der Produktion in den Raum eingeblasen wird
- Die Antriebe für verschiedenste Bewegungen der Kavität sind außerhalb des Reinraums angeordnet, so beispielsweise die Antriebe für das Öffnen und Schließen der Kavität (Form) und/oder die für das Bewegen einer Reckstange und/oder die für ein Anheben oder senken eines Behälters und/oder die die Bewegung einer Blas- oder Fülldüse

- Die innere Wandung des Raums wird in regelmäßigen Abständen gereinigt und/oder sterilisiert, beispielsweise über ein Bespritzen oder Bedampfen mit Lauge, Säure, Entkeimungsflüssigkeit, Wasserstoffperoxid (gasförmig oder flüssig). Insbesondere werden bei der Reinigung und/oder Sterilisation die Innen- und Außenseiten der Kavitäten, Blas- oder Fülldüsen und der Reckstangen miteinbezogen. Insbesondere werden aber auch die inneren Wandungen des Maschinenschutzes einbezogen.
- Die kontaminationsarme Umgebung wird gegen die Umgebungsatmosphäre abgedichtet. Bei einem Rundläufer kann es sich bei der Dichtung um ein Wasserschloss oder eine Gummidichtung handeln, welche(s) den drehenden Teil zum stehenden Teil der Vorrichtung abdichtet.

Insbesondere werden die Behälter bzw. Vorformlinge vor einem Einbringen in die kontaminationsarme Umgebung sterilisiert.

Insbesondere wird der Behälter auf ein und demselben Karussell (Rundläufer) expandiert und mit dem zu verpackenden Endprodukt befüllt.

Insbesondere handelt es sich bei den Behältern vor dem Expandieren um Kunststoffvorformlinge, die bevorzugt die Form eines Reagenzglases aufweisen bzw. eine einzige Öffnung aufweisen. In der Nähe dieser Öffnung befindet sich ein Mündungsbereich, welcher beispielsweise mit einem schon im Spritzgussverfahren angeformten Gewinde für einen Verschluss versehen wurde. Zusätzlich kann im Mündungsbereich ein Tragring vorgesehen sein, welcher zum Transport vorgesehen ist.

In Transportrichtung der Behälter stromaufwärts kann eine Erwärmungseinrichtung vorgesehen sein, welche die kalt angelieferten Vorformlinge erwärmt. Als Erwärmungseinrichtung kann ein Infrarotofen dienen, durch welchen die Vorformlinge transportiert werden. An zumindest einer Seite einer tunnelförmigen Heizstrecke durch den Ofen sind insbesondere Infrarotstrahler angeordnet. Anstatt des Infrarotofens kann auch eine Mikrowellenerwärmungseinrichtung vorgesehen sein, in der insbesondere für jeden Vorformling individuell zugeordnete Kavitäten zur Erwärmung angeordnet sind. Während es sich beim Mikrowellenofen bevorzugt um einen Rundläufer handelt, werden die Vorformlinge beim Infrarotofen zumindest einen Teil der Strecke geradlinig transportiert.

Anstatt der eben beschriebenen Verfahren und Vorrichtungen können die Vorformlinge auch direkt von einer stromaufwärts angeordneten Spritzgussvorrichtung erzeugt und im noch aufgewärmten Zustand weiter an die Form- und Füllvorrichtung weitertransportiert werden. Energetisch gesehen bietet das den Vorteil, dass ein Teil der Wärme nicht an die Umgebung verloren geht. U.U. muss jedoch noch eine Zwischenkonditioniereinrichtung vorgesehen werden, welche die Vorformlinge nur geringfügig temperiert (kleiner als plus oder minus 50°C) bzw. ein Temperaturprofil aufbringt. Werden die Vorformlinge innerhalb eines Reinraums spritzgegossen, so ist u.U. keine weitere Sterilisation dieser nötig, wenn sich der Reinraum bis zu einer Position hin erstreckt, an der ein Verschluss auf den Behälter nach dem Befüllen aufgebracht wird.

Von den Transporteinrichtungen werden die Vorformlinge an die Formfüllstation 6 übergeben. Die Formfüllstationen umfassen üblicherweise zwei Formhälften, in die der Vorformling eingelassen werden kann. In den Formhälften wird der Vorformling dann zu einem Behälter ausgeformt. Dies kann beispielsweise durch Verstrecken mittels einer Reckstange und/oder Einbringen eines Mediums unter Druck erfolgen. In einer Ausführungsform ist vorgesehen, dass für das Ausformen des Behälters das in den Behälter einzuführende Produkt genutzt wird. Alternativ kann jedoch auch vollständig oder teilweise mit Hilfe von eingeblasener Luft das Ausformen bewirkt werden.

Unabhängig davon, ob bereits das Ausformen mittels Produkt erfolgt oder nicht, ist vorgesehen, dass in der Formfüllmaschine, insbesondere in der Formfüllstation auch die Befüllung des ausgeformten Behälters erfolgt, wobei die Befüllung bereits während des Ausformens beginnen kann oder erst nach vollständigem Abschließen des Ausformens erfolgt. Dies liefert den Vorteil, dass der nach dem Ausformen immer noch heiße Behälter sehr schnell gekühlt werden kann.

Es ist erfindungsgemäß vorgesehen, dass in der Formfüllmaschine ein gezieltes lokales Kühlen bestimmter Bereiche des Vorformlings bzw. des sich im Ausformen befindlichen Behälters erfolgt. Durch das Kühlen nur einzelner Bereiche, wie beispielsweise Streifen im Umfangs- oder Längsrichtung des Behälters, ergibt sich für diese Bereiche ein von den übrigen Bereichen des Vorformlings bzw. Behälters verschiedenes Streck- bzw. Ausformverhalten. So können gezielt bestimmte Strukturen, wie Riffel, an der Oberfläche des Behälters erzeugt werden. Dabei kann als flüssiges Medium entweder eine beliebige Flüssigkeit, wie beispielsweise Wasser, verwendet werden oder aber bereits hier das in den Behälter einzufüllende Produkt verwendet werden. Grundsätzlich erfolgt diese lokale Kühlung über entsprechend dafür ausgebildete Mittel, wie beispielsweise Düsen, die das verwendete Medium zum lokalen Kühlen auf die bestimmten Bereiche in dem Vorformling bzw. Behälter auftragen.

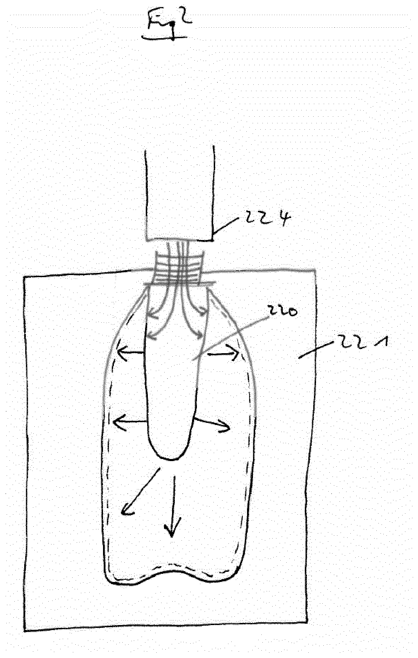

Dazu zeigt Fig. 2 eine mögliche Ausführungsform, bei der der Vorformling 220 in der Form 221 für das Ausformen positioniert ist. Der Ausformprozess kann bereits begonnen haben oder der Vorformling kann noch in seiner unveränderten Form sein. Üblicherweise werden die Vorformlinge vor der Aufnahme durch die Form erhitzt, so dass die Verstreckung bzw. Ausformung der Vorformlinge erfolgen kann. Dazu muss das verwendete Material, wie beispielsweise PET, auf eine Temperatur erhitzt werden, bei der es zumindest teilweise fließend, auf jeden Fall deformierbar ist.

Die lokale Kühlung bestimmter Bereiche des Vorformlings bzw. im Ausformen befindlichen Behälters wird über das Mittel 224 bewirkt, das das entsprechend gewählte Medium zum Kühlen dieser Bereiche in den Vorformling 220 einleitet. In der in Fig. 2 dargestellten Ausführungsform ist das Mittel nicht in den Vorformling eingelassen, sondern über der Öffnung des Vorformlings 220 angeordnet. Hier kann eine Düse vorgesehen sein, die das Medium gemäß der dargestellten Pfeilrichtung in dem Vorformling verteilt. Dabei kann beispielsweise auch vorgesehen sein, dass das Medium so in den Vorformling eingegeben wird, dass es bereits von der Öffnung aus an den Innenwänden des Vorformlings herunterläuft. Dies führt dazu, dass die Kühlung im oberen Bereich des Vorformlings am stärksten ist. Eine gezielte Verteilung des Kühlmediums bzw. das Erreichen einer maximalen Kühlleistung weiter entfernt von der Öffnung, gestaltet sich mit dieser Ausführungsform jedoch schwierig, da der Austrittswinkel des Kühlmediums nur in einem durch die Größe der Öffnung des Vorformlings und die Entfernung der Düse zur Öffnung bestimmten Bereich variiert werden kann.

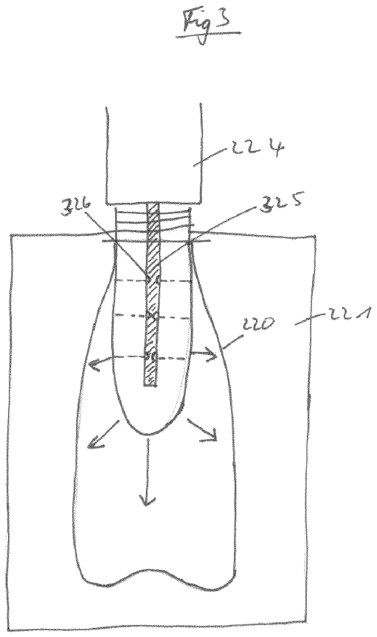

In der Ausführungsform gemäß Fig. 3 ist daher vorgesehen, dass das Mittel zum lokalen Kühlen 224 eine in den Vorformling bzw. Behälter einführbare Lanze 225 umfasst. Diese Lanze kann an ihrem Umfang mehrere Öffnungen bzw. Düsen umfassen, die derart angeordnet sind, dass sie das zur lokalen Kühlung verwendete Medium gezielt an Stellen auf der Innenseite des Behälters bzw. Vorformlings 220 aufbringen können. Dazu können die Düsen in einem bestimmten Abstand zueinander angeordnet sein und/oder der Ausstoßwinkel des Mediums kann durch geeignete Wahl der Düsenform oder Düsenausrichtung eingestellt werden. Ebenso kann das Ausbringen des Kühlmediums aus den einzelnen Düsen zeitlich gesteuert werden. Damit kann der Durchfluss und die Kühlleistung kontrolliert werden. So kann der Auftreffpunkt auf der Innenseite des Vorformlings bzw. Behälters genau festgelegt werden.

Es ist weiterhin vorteilhaft, wenn die Lanze 325 bezüglich des Vorformlings bewegbar ausgebildet ist. So kann beispielsweise vorgesehen sein, dass die Lanze in dem Vorformling auf und ab bewegt werden kann. Auch eine Rotation der Lanze 325 kann vorgesehen sein. Durch die Auf- und Abbewegung können beispielsweise Streifen in Längsrichtung des Vorformlings bzw. des Behälters gezielt lokal gekühlt werden, so dass in dem schließlich ausgeformten Behälter Riffel parallel zur Längsachse des Behälters entstehen. Durch die Rotation der Lanze und der vorgesehenen Düsen kann ein Streifenmuster quer zur Längsachse des Vorformlings erzeugt werden, indem während des Ausformens diese Bereiche gekühlt werden. Auch Kombinationen von Drehung und Auf- und Abbewegungen sind denkbar, was zu irregulären Streifenmustern führen kann.

Da das Aufbringen eines flüssigen Mediums, im Gegensatz zum lokalen Kühlen mit beispielsweise Luft, mit hoher Genauigkeit erfolgen kann, kann durch geeignete Wahl des Aufbringdruckes und/oder der Temperatur des verwendeten Mediums an unterschiedlichen Auftreffpunkten eine Vielzahl unterschiedlicher Muster realisiert werden. So kann beispielsweise auf einer Seite des Vorformlings Medium mit geringer Temperatur und auf einer anderen Seite des Vorformlings Medium mit höherer Temperatur auf der Innenseite des Vorformlings verteilt werden, so dass der ausgeformte Behälter sich an der kühleren Seite weniger weit ausdehnt als an der wärmeren Seite. Auch kleine Punktmuster mit unterschiedlichen Punkttiefen können so erreicht werden. Es ist auch möglich, für einzelne Stellen bei der lokalen Kühlung eine längere Kühlzeit zu nutzen, um diese Bereiche auf eine geringere Temperatur als die übrigen gekühlten Bereiche zu bringen.

Ferner kann das Fließverhalten der Flüssigkeit zusammen mit ihrer, verglichen zu Gasen, hohen Kühlleistung verwendet werden, um auch durch das Herunterfließen der Flüssigkeit an der Innenwand des Vorformlings eine bestimmte Kühlung einzelner Bereiche zu realisieren. Da sich die Flüssigkeit beim allmählichen Herunterlaufen an der Innenseite des Vorformlings erwärmt, kann so gleichzeitig ein Temperaturgradient in das Behältermaterial eingeprägt werden, der sich beim Ausformen in unterschiedlich starker Verstreckung dieser Bereiche äußert.

Die in Fig. 3 dargestellte Lanze kann entweder als separate Einheit in den noch nicht vollständig ausgeformten Behälter eingeführt werden oder es kann sich bei dieser Lanze um die zum Verstrecken des Vorformlings genutzte Reckstange handeln. Wird die Reckstange verwendet, um das Medium zur lokalen Kühlung auf die bestimmten Bereiche des Vorformlings aufzubringen, so kann dies entweder vor dem Verstrecken oder während des Verstreckens erfolgen. Erfolgt die lokale Kühlung vor dem Verstrecken, so wird die Reckstange zunächst in eine vorgegebene Position in dem Vorformling eingefahren und gegebenenfalls gedreht, um die lokale Kühlung der bestimmten Bereiche zu realisieren. Anschließend wird die Zufuhr von Medium ausgesetzt und die Reckstange wird zum Verstrecken des Vorformlings weiter in die Form 221 eingefahren.

Auch mehrstufiges lokales Kühlen mit der Reckstange ist denkbar. So kann zu verschiedenen Zeitpunkten vor und während des Ausformens Kühlmedium aus der/den Düsen der Reckstange auf den Behälter aufgebracht werden. Besonders vorteilhaft ist es, wenn bei Verwendung der Reckstange oder einer Lanze zum lokalen Kühlen des Behälters die Kühlung erst bei einem schon teilweise ausgeformten Behälter erfolgt. So kann beispielsweise die lokale Kühlung auch bei einem bereits zu 50 bzw. 70 % der Zielgröße ausgeformten Behälter erfolgen. Da die Dehnung des Materials bei einem nahezu vollständig ausgeformten Behälter bis zur vollständigen Ausformung weniger groß ist als die Streckung des Materials vom Vorformling zum ausgeformten Behälter, kann bei lokaler Kühlung während des Ausformprozesses die Gefahr von Beschädigungen des Vorformlings bzw. Behälters und insbesondere die Bildung von Rissen in der Behälterwand aufgrund großer Temperaturunterschiede und Spannungen im Material, reduziert werden.

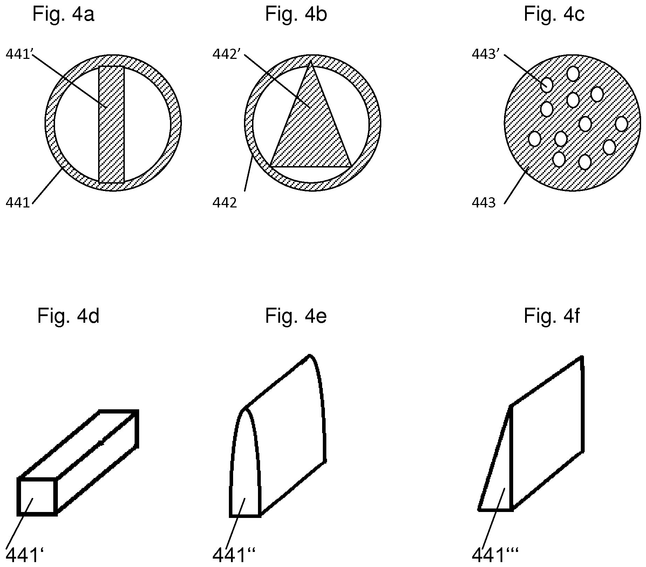

Fig. 4 zeigt mögliche Ausführungsformen der Düse, wie sie in dem Mittel zum Einbringen des Mediums gemäß Fig. 2 vorgesehen sein kann aber auch wie sie an der Lanze bzw. Reckstange gemäß der Ausführungsform in Fig. 3 angeordnet sein kann. Während grundsätzlich eine Düse, die eine Öffnung aufweist, durch die das zum lokalen Kühlen verwendete Medium geleitet werden kann, verwendet werden kann, kann es vorteilhaft sein, bestimmte, mit zusätzlichen Strukturen versehene Düsen zu verwenden.

Gemäß Fig. 4a kann beispielsweise vorgesehen sein, dass die Düsenöffnung 441 einen durchgängigen oder zumindest teilweise sich in die Öffnung erstreckenden Steg 441' umfasst, der beispielsweise von einer Seite der Düsenöffnung bzw. der die Düsenöffnung begrenzenden Fläche ausgeht. Das durch die Düse geleitete Material wird dann in zwei nahezu halbkreisförmige Strahlen aufgeteilt. Dies kann beispielsweise erreicht werden, indem der Steg 441' als Quader ausgebildet ist. Er kann sich in die Düse hinein (senkrecht zur Zeichenebene), beispielsweise mehrere Millimeter, aber auch einen bis zu mehrere Zentimeter. Je weiter sich der Steg bzw. die Struktur 441 in die Düse hinein erstreckt, desto ähnlicher wird der aus der Düse ausgeleitete Medienstrahl der in Fig. 4a dargestellten Fläche der Öffnungen in der Düse sein. Dies kann aber teilweise unerwünscht sein. Außerdem kann ein Umlenken des Mediums beim Durchleiten durch die Düse vorgesehen sein, so dass ein bestimmter Austrittswinkel realisiert wird. Dazu kann die Form der Struktur 441' bzw. des Steges senkrecht zur Zeichenebene je nach Zweck unterschiedlich ausgebildet werden. So kann beispielsweise der Steg 441' eine wie hier dargestellte rechteckige Grundfläche aufweisen und als Halbzylinder oder Vollzylinder ausgebildet sein. Auch kann der Steg 441' als Prisma ausgebildet sein, dessen Spitze aus der Zeichenebene hinauszeigt. In den Fig. 4d-f sind dazu unterschiedliche Ausführungsformen dargestellt.

Fig. 4b zeigt eine weitere Ausführungsform, bei der die Düse 442 mit einer dreieckigen inneren Struktur 442' versehen ist, so dass das durch die Düse geleitete Medium an drei Öffnungen austreten kann. Auch diese Struktur 442' kann analog zu den in Fig. 4d-4f dargestellten Ausführungsformen unterschiedliche dreidimensionale Realisierungen besitzen. So kann sie beispielsweise als dreiseitige Pyramide ausgebildet sein.

Fig. 4c zeigt eine weitere Ausführungsform, bei der die Düse 443 mit einer Blende versehen ist, in der mehrere Öffnungen 443' zum Ausleiten des Mediums vorhanden sind. Diese Ausführungsform eignet sich besonders, um punktuelle lokale Kühlung zu gewährleisten, so dass der ausgeformte Behälter kleinere oder größere Vertiefungen aufweist. Die Öffnungen 443' können dabei gleich groß oder unterschiedlich groß sein, so dass verschieden große Flächen auf der Oberfläche des Vorformlings lokal gekühlt werden können.

Die Ausführungsform der Figuren 4a-c können auch kombiniert werden, um kompliziertere lokale Kühlmuster zu erzeugen. Die hier angeführten Ausführungsformen sind nicht beschränkend. Auch andere Formen sind denkbar.

Fig. 4d zeigt den Steg gemäß Fig. 4a in perspektivischer Ansicht. In dieser Ausführungsform ist der Steg 441' als Quader ausgebildet. Gemäß Fig. 4e kann der Steg 441" ebenfalls eine rechteckige Grundfläche besitzen, jedoch als Kegelausschnitt (beispielsweise halber Kegel) oder als Ausschnitt eines Kegels mit elliptischer Grundfläche mit den Halbachsen e und 2d ausgebildet sein. Diese Ausführungsform des Stegs aus Fig. 4a sorgt für ein kontinuierliches Auseinanderfließen des ursprünglich in die Düse eingeleiteten Medienstrahls und teilt diesen in zwei Strahlen auf. Unkontrolliertes Umherspritzen kann aufgrund der kontinuierlichen Aufteilung der Strahlen mit einer entsprechenden stromlinienförmigen Struktur des Steges, wie sie in Fig. 4e dargestellt ist, vermieden werden. In Fig. 4f ist der Steg nicht symmetrisch wie in den Fig. 4d und 4e dargestellt, sondern auf der einen Seite abgeschrägt, während er auf der anderen Seite eine Fläche senkrecht zur Grundfläche aufweist. Auch Kombinationen der Ausführungsformen gemäß Fig. 4d bis Fig. 4f sind denkbar. Ebenso können diese Ausführungsformen des Steges aus Fig. 4a auch auf die Ausführungsformen der Strukturen in Fig. 4b und fig. 4c angewendet werden.

Es ist weiterhin vorteilhaft, wenn die Struktur innerhalb der Düsen, wie sie beispielsweise in Fig. 4a bis Fig. 4c dargestellt ist, beweglich ist. So kann vorgesehen sein, dass diese Strukturen drehbar in der dargestellten Zeichenebene sind. Außerdem kann vorgesehen sein, dass die Strukturen senkrecht zur Zeichenebene verkippbar sind. So kann der Austrittswinkel des Mediums aktiv beeinflusst und gesteuert werden, um ein bestimmtes Muster bei der Kühlung zu realisieren und damit auf dem Vorformling bzw. der Oberfläche des Behälters einzuprägen.

## Patentansprüche

1. Formfüllmaschine (5) mit einer oder mehreren Formfüllstationen, in denen Vorformlinge in einer Form zu Behältern ausgeformt und befüllt werden können, wobei Mittel (224) zur lokalen Kühlung wenigstens eines Bereichs des Vorformlings (220) vorgesehen sind, **dadurch gekennzeichnet, dass** die Mittel (224) zur lokalen Kühlung so ausgebildet sind, dass ein flüssiges Medium in den Vorformling auf den wenigstens einen Bereich eingebracht werden kann, bevor der Vorformling vollständig ausgeformt ist, wobei das Medium das in den Behälter zu füllende Produkt ist.

2. Formfüllmaschine nach Anspruch 1, **dadurch gekennzeichnet, dass** die Mittel (224) eine in einen Vorformling einführbare Lanze (325) umfassen, die ein oder mehrere Düsen (326) aufweist, durch die das Medium auf den zu kühlenden Bereich aufgebracht werden kann.

3. Formfüllmaschine nach Anspruch 2, **dadurch gekennzeichnet, dass** die Lanze (325) eine zum Ausformen des Behälters verwendete Reckstange ist.

4. Formfüllmaschine nach Anspruch 2 oder 3, **dadurch gekennzeichnet, dass** durch die Lanze (325) zum zumindest teilweisen Ausformen des Vorformlings Produkt in den Vorformling geleitet werden kann.

5. Formfüllverfahren zum Formen von Behältern aus Vorformlingen und Befüllen der Behälter in einer Form einer Formfüllstation, wobei der Vorformling vor dem vollständigen Ausformen in wenigstens einem Bereich lokal gekühlt wird, **dadurch gekennzeichnet, dass** ein flüssiges Medium zum lokalen Kühlen des wenigstens einen Bereichs verwendet wird und das Medium das in den Behälter zu füllende Produkt ist.

6. Formfüllverfahren nach Anspruch 5, **dadurch gekennzeichnet, dass** das Medium über eine in den Vorformling einführbare Lanze (325) mit einer oder mehreren Düsen (326) in den Vorformling eingebracht wird.

7. Formfüllverfahren nach Anspruch 6, **dadurch gekennzeichnet, dass** die Lanze eine zum Ausformen verwendete Reckstange ist.

8. Formfüllverfahren nach einem der Ansprüche 5 bis 7, **dadurch gekennzeichnet, dass** der Bereich einen Streifen parallel oder senkrecht zur Längsachse des Vorformlings umfasst.

9. Formfüllverfahren nach einem der Ansprüche 5 bis 8, **dadurch gekennzeichnet, dass** das Kühlen durch Aufbringen und Herunterlaufen des Mediums an der Vorformlinginnenseite erfolgt.

10. Formfüllverfahren nach Anspruch 9, **dadurch gekennzeichnet, dass** der Ausbringdruck und/oder die Ausbringtemperatur des Mediums in Abhängigkeit einer vorgegebenen Temperaturverteilung bestimmt wird.

11. Formfüllverfahren nach einem der Ansprüche 5 bis 10, **dadurch gekennzeichnet, dass** das Kühlen erfolgt bevor der Behälter bis zu 70%, bevorzugt 50% seiner Zielgröße ausgeformt wurde.

12. Formfüllverfahren nach einem der Ansprüche 5 bis 11, **dadurch gekennzeichnet, dass** das Ausformen mit Produkt erfolgt.

13. Formfüllverfahren nach Anspruch 12, **dadurch gekennzeichnet, dass** das Ausformen in zwei Teilschritten erfolgt, wobei im ersten Teilschritt das Ausformen mit heißen Produkt oder Luft erfolgt und im zweiten Teilschritt das Ausformen mit kaltem Produkt erfolgt.

## Claims

1. Forming and filling machine (5) comprising one or more forming and filling stations, in which preforms are shaped in a mould to form containers and can be filled, means (224) for localised cooling of at least one region of the preform (220) being provided, **characterised in that** the means (224) for localised cooling are formed such that a liquid medium can be introduced into the preform at the at least one region before the preform is fully shaped, the medium being the product to be filled into the container.

2. Forming and filling machine according to claim 1, **characterised in that** the means (224) comprise a lance (325), which can be inserted into a preform and comprises one or more nozzles (326), by means of which the medium can be applied to the region to be cooled.

3. Forming and filling machine according to claim 2, **characterised in that** the lance (325) is a stretching rod used for shaping the container.

4. Forming and filling machine according to either claim 2 or claim 3, **characterised in that** product can be conveyed into the preform by means of the lance (235) in order to shape the preform at least in part.

5. Forming and filling method for forming containers from preforms and filling the containers in a mould of a forming and filling station, the preform being locally cooled in at least one region before being fully shaped, **characterised in that** a liquid medium for localised cooling of the at least one region is used and the medium is the product to be filled into the container.

6. Forming and filling method according to claim 5, **characterised in that** the medium is introduced into the preform via a lance (325) which can be inserted into the preform and has one or more nozzles (326).

7. Forming and filling method according to claim 6, **characterised in that** the lance is a stretching rod used for shaping.

8. Forming and filling method according to any of claims 5 to 7, **characterised in that** the region includes a strip in parallel with or perpendicular to the longitudinal axis of the preform.

9. Forming and filling method according to any of claims 5 to 8, **characterised in that** the cooling takes place by the medium being applied to and running down the inner face of the preform.

10. Forming and filling method according to claim 9, **characterised in that** the output pressure and/or the output temperature of the medium is determined on the basis of a predefined temperature distribution.

11. Forming and filling method according to any of claims 5 to 10, **characterised in that** the cooling takes place before the container is shaped to up to 70%, preferably 50%, of its target size.

12. Forming and filling method according to any of claims 5 to 11, **characterised in that** the shaping takes place by means of the product.

13. Forming and filling method according to claim 12, **characterised in that** the shaping takes place in two partial steps, the shaping by means of hot product or air taking place in the first partial step and the shaping by means of cold product taking place in the second partial step.

## Revendications

1. Machine de formage et de remplissage (5) comprenant un ou plusieurs postes de formage et de remplissage dans lesquels des préformes peuvent être transformées en contenants par formage dans un moule et être remplies, des moyens (224) étant prévus pour le refroidissement localisé d'au moins une zone de la préforme (220),
**caractérisée en ce que** les moyens (224) pour le refroidissement localisé sont conçus de manière à pouvoir introduire dans la préforme un agent liquide, sur ladite au moins une zone, avant que la préforme ait subi sa complète mise en forme, l'agent étant le produit devant être introduit dans le contenant pour le remplir.

2. Machine de formage et de remplissage selon la revendication 1, **caractérisée en ce que** les moyens (224) comportent une lance (325) pouvant être introduite dans une préforme, et qui présente une ou plusieurs buses (326), par l'intermédiaire desquelles l'agent peut être appliqué sur la zone à refroidir.

3. Machine de formage et de remplissage selon la revendication 2, **caractérisée en ce que** la lance (325) est une tige d'étirage utilisée pour le formage du contenant.

4. Machine de formage et de remplissage selon la revendication 2 ou la revendication 3, **caractérisée en ce que** du produit peut être introduit dans la préforme par la lance (325) pour le formage au moins partiel de la préforme.

5. Procédé de formage et de remplissage pour assurer le formage de contenants à partir de préformes, et pour remplir les contenants dans un moule d'un poste de formage, la préforme étant, avant son formage complet, refroidie localement dans au moins une zone, **caractérisé en ce que** l'on utilise un agent liquide pour le refroidissement localisé de ladite au moins une zone, et l'agent est le produit devant être introduit dans le contenant pour le remplir.

6. Procédé de formage et de remplissage selon la revendication 5, **caractérisé en ce que** l'agent est introduit dans la préforme par l'intermédiaire d'une lance (325) avec une ou plusieurs buses (326), qui peut être introduite dans la préforme.

7. Procédé de formage et de remplissage selon la revendication 6, **caractérisé en ce que** la lance est une tige d'étirage utilisée pour le formage.

8. Procédé de formage et de remplissage selon l'une des revendications 5 à 7, **caractérisé en ce que** ladite zone comprend une bande parallèle ou perpendiculaire à l'axe longitudinal de la préforme.

9. Procédé de formage et de remplissage selon l'une des revendications 5 à 8, **caractérisé en ce que** le refroidissement s'effectue par l'application et l'écoulement vers le bas de l'agent, sur le côté intérieur de la préforme.

10. Procédé de formage et de remplissage selon la revendication 9, **caractérisé en ce que** la pression de distribution et/ou la température de distribution de l'agent est déterminée en fonction d'une répartition de température prédéfinie.

11. Procédé de formage et de remplissage selon l'une des revendications 5 à 10, **caractérisé en ce que** le refroidissement s'effectue avant que le contenant ait été formé jusqu'à 70%, de préférence 50% de sa grandeur finale visée.

12. Procédé de formage et de remplissage selon l'une des revendications 5 à 11, **caractérisé en ce que** le formage est effectué à l'aide de produit.

13. Procédé de formage et de remplissage selon la revendication 12, **caractérisé en ce que** le formage est effectué en deux étapes partielles, le formage étant effectué à l'aide de produit chaud ou d'air dans la première étape partielle, et le formage étant effectué à l'aide de produit froid dans la deuxième étape partielle.
